# EUROPEAN PATENT SPECIFICATION

(11) **EP 0 526 917 B1**
(45) Date of publication and mention of the grant of the patent: **12.06.1996**
(21) Application number: 92118354.7
(22) Date of filing: 08.11.1988
(51) Int. Cl.: G03G 15/00

(54) **Image-forming machine**
Bilderzeugungsgerät
Appareil de formation d'images

(30) Priority: 10.11.1987 JP 282201/87; 11.11.1987 JP 283078/87; 30.11.1987 JP 300074/87; 30.11.1987 JP 300079/87
(43) Date of publication of application: 10.02.1993
(62) Divisional of application: 88118572.2
(73) Proprietor: MITA INDUSTRIAL CO. LTD., Osaka 540 (JP)
(72) Inventor: Koyama, Shigeo, Ibaraki-shi, Osaka-fu (JP)
(74) Representative: Popp, Eugen, Dr.

(56) References cited:
- DE-A- 3 608 259
- DE-A- 3 721 796
- US-A- 4 627 707
- PATENT ABSTRACTS OF JAPAN vol. 12, no. 71 (P-673) 5 March 1988 & JP-A-62 210 478 (MITA IND.) 16 September 1987

## Description

### Field of the Invention

This invention relates to an image-forming machine such as a laser beam printer.

### Description of the Prior Art

Image-forming machines such as a laser beam printer generally include an image-bearing means such as a rotating drum having a photosensitive material on its surface, an image-forming means for forming a toner image on the surface of the photo-sensitive material, a transfer means disposed in a transfer zone, a conveying passage for conveying a sheet material such as a recording sheet through the transfer zone, and a receiving section for receiving the sheet materials conveyed through the conveying passage in the stacked state. Such an image forming machine is described, for example, in US-A-4 627 707.

The conventional image-forming machines, however, have not proved to be entirely satisfactory, and are still desired to be improved in various respects.

It is often desired to form an image overlappingly on one surface of the sheet material. In the conventional image-forming machines, the structure of means for re-feed the sheet material conveyed through the conveying passage into this conveying passage is complex.

### Summary of the Invention

It is an object of this invention to provide an improved image-forming machine which can form an overlapping image in addition to an ordinary image by means having a relatively simple structure.

Other objects of this invention along with its features will become apparent from the following description.

### Brief Description of the Drawings

Figure 1 is a simplified sectional view showing a preferred embodiment of the laser beam printer as one example of the image-forming machine of the invention with an upper cover member at a closed position and an auxiliary receiving member at a second position.

Figure 2 is a partial enlarged view show a passage switching means and its vicinity in the laser beam printer of Figure 1.

Figures 3-A and 3-B show the passage switching means with its switching guide plate being at a first position and a second position, respectively.

Figure 4 is a simplified sectional view showing the laser beam printer of Figure 1 with its upper cover member being at an open position and its auxiliary receiving section being at a first position.

Figure 5 is a simplified sectional view showing a modified example of the laser beam printer of the embodiments shown in Figs. 1 to 4.

### Detailed Description of Preferred Embodiments

The invention will be described below in detail with reference to the accompanying drawings.

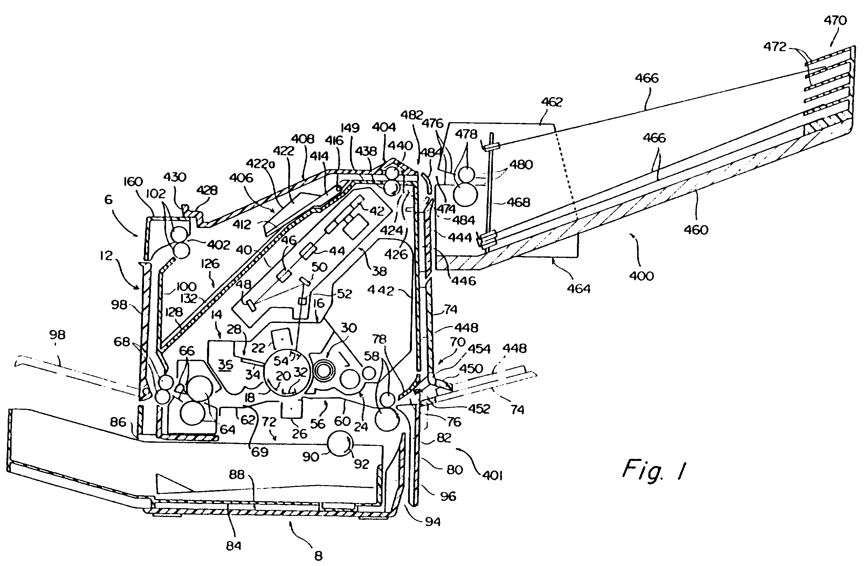

Figures 1 to 3 show an embodiment of the laser beam printer as one example of the image-forming machine of the invention.

In Figure 1, the illustrated laser beam printer includes a main body shown generally at 401 and a sorter shown at 400.

The main body 401 is provided with a rectangular parallelpipedal housing 6 comprised of a lower housing 8, an upper housing 10 and an opening-closing housing 12. The opening-closing housing 12 is mounted on the upper housing 10 so as to be free to pivot between an open position (not shown) and a closed position (shown in Figures 1 to 4).

A process unit 14 is disposed nearly centrally in the housing 6. The illustrated process unit 14 is provided with a unit frame 16 to be detachably mounted on the housing 6, and a rotating drum 18 constituting an image-bearing means is rotatably mounted on the unit frame 16. An electrophotographic sensitive material is disposed on the peripheral surface of the rotating drum 18. Around the rotating drum 18 to be rotated in the direction shown by an arrow 20 are disposed a charging corona discharger 22, a developing device 24, a transfer corona discharger 26 constituting a transfer means and a cleaning device 28. The charging corona discharger 22, the developing device 24 and the cleaning device 28 are mounted on the unit frame 16. The charging corona discharger 22 charges the photosensitive material on the rotating drum 18 to a specific polarity. The developing device 24 is provided with a magnetic brush mechanism 30 and develops a latent electrostatic image formed as described below to a toner image. The transfer corona discharger 26 disposed in a transfer zone 32 applies a corona discharge to the back surface of a sheet material conveyed through a conveying passage as described below. The cleaning device 28 is provided with an elastic blade 34 acting on the surface of the photosensitive material and removes the toner remaining on the surface of the photosensitive material and recovers it in a toner recovery chamber 36.

An optical unit 38 is disposed above the process unit 14 within the housing 6. The optical unit 38 has a box-like unit housing 40, and within the housing 40 are disposed a laser beam source (not shown), a rotating polygon mirror 42 to be moved in a predetermined direction, a first image-forming lens 44, a second image-forming lens 46, a first reflecting mirror 48, a second reflecting mirror 50 and a cylindrical lens 52. The laser beam source (not shown) irradiates a laser beam based on the image information output, for example, from a computer toward the rotating polygon mirror 42. As shown by solid lines in Figure 1, the laser beam reflected from the polygon mirror 42 passes through the first image-forming lens 44 and the second image-forming lens 46 and reaches the first reflecting mirror 48. It is reflected by the first reflecting mirror 48 and the second reflecting mirror 50, passes through the cylindrical lens 12 and is projected onto the surface of the rotating drum 18. A conveying mechanism shown generally at 56 is provided below the process unit 14 within the housing 6. The conveying mechanism 56 is provided with a conveyor roller pair 58, a guide plate 60, a guide plate 62, a fixing roller 64, a guide claw 66 and a conveyor roller pair 68 which defines a main portion of a conveying passage 69 for conveying sheet materials such as recording paper. In the illustrated embodiment, the upstream end of the conveying passage 69 is bifurcated. One part extends to the right in a straight line, and a hand-insertion feed means 70 is disposed at its upstream end. The other part is curved and extends downwardly, and an automatic feed means 72 is disposed at its upstream end (more specifically, below the conveying mechanism 56 and at the bottom part of the housing 6). The hand-insertion feed means 70 is provided with a table 74 which is free to pivot between a feed position shown in Figure 1 and a storage position (not shown) displaced upwardly. When the hand-insertion feed means 70 is to be used, the table 74 is held at the feed position. When a sheet material is positioned on the table 74 and inserted through an opening 76 formed in the right wall surface of the housing 6, the sheet material is conducted to the conveying roller pair 58 past the space between the undersurface of a guide plate 78 and the upper end edge of a guide protrusion 82 provided on the inside surface of the wall 80 of the lower housing 8. The illustrated automatic feed means 72 is provided with a cassette 84 in which sheet materials are loaded in the stacked state. The cassette 84 is detachably loaded into a cassette receiving section 88 defined in the bottom part of the housing 6 through an opening 86 formed in the left wall surface of the lower housing 8. A feed roller 90 is disposed above the cassette receiving section 88. Accordingly, when the feed roller 90 is rotated in the direction shown by an arrow 92, the sheet materials are delivered one by one from the cassette 84. The delivered sheet material is guided by a guide protrusion 96 provided in an upstanding wall 94 in the lower housing 6 and the guide protrusion 82 provided in the wall 80, and conducted to the conveyor roller pair 58.

The downstream end portion of the conveying passage is bifurcated. In this regard, an opening-closing cover 98 constituting part of the opening-closing housing 12 is mounted so as to be free to pivot between a first position shown by a solid line in Figure 1 and a second position shown by a two-dot chain line in Figure 1. When the opening-closing cover 98 is at the first position, the sheet material fed by the conveyor roller pair 68 is further conveyed upwardly and conducted to a discharge roller pair 102 through the space between the opening-closing cover 98 and a wall 100 of the opening-closing housing 12, and is discharged out of the housing 6 by the action of the discharge roller pair 102. On the other hand, when the opening-closing cover 98 is at the second position, the sheet material fed by the conveyor roller pair 68 is directly discharged out of the housing 6 without being conveyed upwardly and received on the inside surface (the upper surface in the state shown by the two-dot chain line) of the cover 98.

With reference to Figure 1, the operation of the image-forming machine described above is briefly stated below.

While the rotating drum 18 is rotated in the direction of arrow 20, the charging corona discharger 22 charges the photosensitive material of the rotating drum 18, and then in the projecting zone 54, a laser beam having a certain piece of image information from the laser beam source (not shown) of the optical unit 38 is projected onto the photosensitive material to form a latent electrostatic image corresponding to the image information on the surface of the photosensitive material. Thereafter, the magnetic brush mechanism 30 of the developing device 24 applies a toner to the latent electrostatic image on the photosensitive material to develop it to a toner image. Thus, by the action of the image-forming machine comprised of the charging corona discharger 22, the optical unit 38 and the developing device 24, a toner image is formed on the rotating drum 18. Then, a sheet material fed from the hand-insertion feed means 70 or the automatic feed means 72 is brought into contact with the photosensitive material in the transfer zone 32 to transfer the toner image from the photosensitive material to the sheet material. The sheet material bearing the toner image is peeled from the rotating drum 18 and conveyed to the fixing roller pair 64. By the action of the fixing roller pair 64, the toner image is fixed to the surface of the sheet material. The sheet material bearing the fixed toner image is conveyed by the conveyor roller pair 68, and when the opening-closing cover 98 is at the second position, directly discharged onto the cover 98. As can be seen from Figure 1, the discharged sheet material has the image-bearing surface turned upwardly. In contrast, when the cover 98 is at the first position, the sheet material conveyed by the conveying roller pair 68 is further conveyed upwardly between the cover 98 and the wall 100, and by the action of the discharge roller pair 102, discharged toward the receiving section 126 provided in the opening-closing housing 12. In this case, the discharged sheet material has the imagebearing surface turned downwardly. The sheet material discharged from the discharge roller pair 102 is received by the receiving section 126 of the housing 12 or is introduced into the introduction passage through an introduction opening of the sorter. Meanwhile, the rotating drum 18 continues to rotate, and by the action of the cleaning device 28, the toner remaining on the photosensitive material is removed.

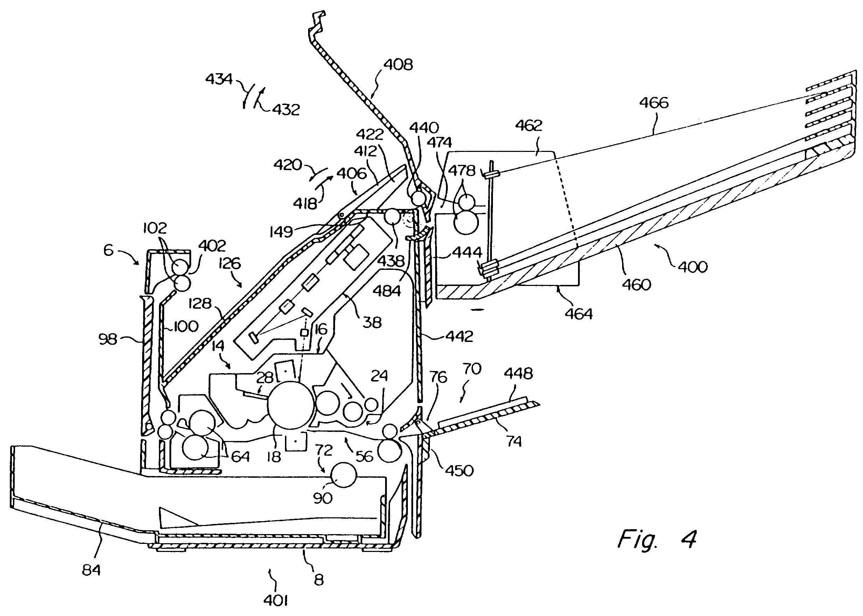

With reference to Figure 4 as well as Figure 1, the receiving section 126 provided in the opening-closing housing 12 and elements relating to it will be described.

In the illustrated embodiment, the receiving section 126 is defined by the upwardly extending wall 100 and an inclined upper wall 128 extending upwardly inclinedly to the right in Figures 1 and 4. The receiving surface defined by the upper surface of the inclined upper wall 128 extends in a straight line upwardly inclinedly at an angle of about 45 degrees from one end portion (the left end portion in Figures 1 and 4) of the main body to its other end portion (the right end portion in Figures 1 and 4). A plurality of vertically spaced protrusions 132 extending in the direction perpendicular to the sheet surface in Figures 1 and 4 are provided integrally on the upper surface of the inclined upper wall 128.

An auxiliary receiving member 406 is disposed on the upper end portion of the receiving section 126, namely on the upper end portion of the inclined upper wall 128. The illustrated auxiliary receiving member 406 will be described in more detail below.

With reference to Figures 1, 3 and 4, in the illustrated embodiment, a re-introducing conveying means is provided for selectively conducting the sheet material delivered from the discharge roller pair 102 to a conveying passage and re-conveying it. The re-introducing conveying means defines a re-introducing conveying passage for conducting the sheet material delivered from a delivery opening 402 outside the machine housing 6 to the opening 76 acting as an introduction opening, and in the illustrated embodiment, is provided with a feed roller mechanism 404 disposed at the upper end of the other end portion (the right end portion in Figures 1 and 4) of the machine housing 6. It also includes the auxiliary receiving member 406 mounted on the receiving section 126 and an upper cover member 408 mounted on the machine housing 6. The receiving section 126 is defined by the perpendicular wall 100 and the inclined upper wall 128 extending upwardly inclinedly from the lower end portion of the wall 100 toward the right in Figures 1 and 4. Its receiving surface defined by the inclined upper wall 128 extends - as already mentioned above - upwardly at an angle of inclination of about 45 degrees from one end portion of the machine housing 6 toward its other end portion. The auxiliary receiving member 406 is provided in the upper end portion (the right end portion in Figures 1 and 4) of the receiving section 126. The illustrated auxiliary receiving member 406 is provided with a plate 412, and supporting projections 414 (only one of which is shown in Figures 1 and 4) provided at both ends of the plate 412 are mounted via pins 416 on the upper end portion of the inclined upper wall 128 so as to be free to pivot in the directions shown by arrows 418 and 420 (Figure 4). The auxiliary receiving member 406 is free to pivot between a first position shown in Figure 4 and a second position shown in Figure 1. When the auxiliary receiving member 406 is pivoted to the first position, a pair of supporting guide protrusions 422 provided in the plate 412 abut with the upper wall 149 of the opening-closing housing 12 to hamper the pivoting movement of the auxiliary receiving member 406 in the direction shown by the arrow 418 beyond the first position. When it is pivoted to the second position, the plate 412 abuts with part of the inclined upper wall 128 to hamper the pivoting movement of the auxiliary receiving member 406 in the direction of the arrow 420 beyond the second position. At the first position, the auxiliary receiving member 406 is positioned on the downstream side of the receiving section 126 in the sheet discharging direction, and its one surface (the left surface in Figure 4) extends upwardly and inclinedly in a straight line from the other end of the inclined upper wall 128 toward the right in Figure 4 and shuts off the re-introducing conveying passage, as shown in Figure 4. On the other hand, at the second position, the auxiliary receiving member 406 is positioned above the upper end portion of the receiving section 126 and its other surface, particularly the guiding surfaces 422a of the supporting guide projections 422, extend upwardly and inclinedly in a straight line toward the right in Figure 1 above the inclined upper wall 128, and define one side (the under side) of part of the re-introducing conveying passage, as shown in Figure 1.

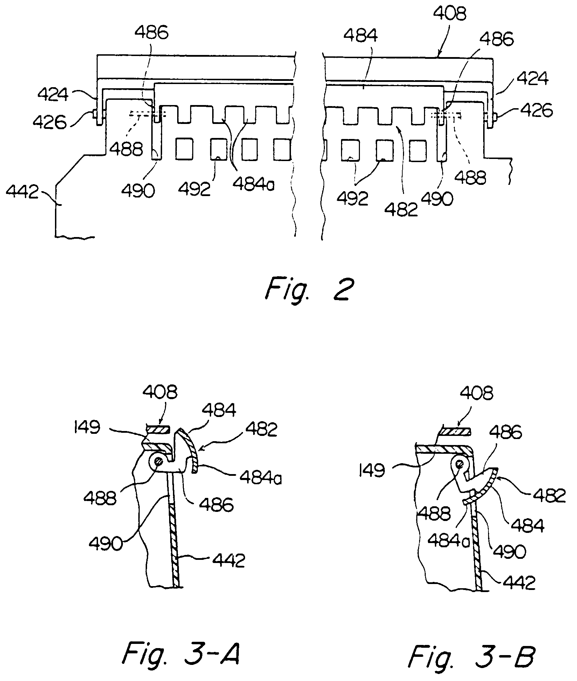

The upper cover member 408 is pivotally mounted on the upper end of the other end portion (the right end portion in Figures 1 and 4) of the machine housing 6. The illustrated upper cover member 408 is in the form of a plate, and in Figure 1, its nearly central part in the left-right direction is slightly bent. Protrusions 424 are provided at both end parts of the base portion of the upper cover member 408, and are mounted pivotally via the pins 426 (see Figure 2). A stop portion 428 is provided at the free end portion of the upper cover member 408, and a gripping protrusion 430 is provided at the end of the stop portion 428. With this arrangement, the upper cover 408 can be easily pivoted in the directions shown by arrows 432 and 434 (Figure 4) by holding the gripping protrusion 430. When the upper cover member 408 is pivoted in the direction of the arrow 432 and held at an open position shown in Figure 4, the overhead space of the receiving section 126 is opened to permit the auxiliary receiving member 406 to be held at the first position. For example, as shown in Figure 1, when the sorter 400 is provided adjacent to the main body 401 of the machine, the upper surface of the upper cover member 408 abuts with part of the sorter 400 whereby the pivoting movement of the upper cover member 408 in the direction of arrow 432 beyond the open position is hampered. On the other hand, when the upper cover member 408 is pivoted in the direction of arow 434 and held at the closed position shown in Figure 1, it extends nearly horizontally above the receiving section 126, and its under surface defines the other side (the upper side) of part of the re-introducing conveying passage. When the cover member 408 is pivoted to the closed position, the stop portion 428 of the upper cover member 408 abuts with the upper wall 160 of the opening-closing housing 12 to hamper the pivoting movement of the upper cover member 408 in the direction of arrow 434 beyond the closed position. At the closed position, the upper cover member 408 covers the overhead space of the receiving section 126, and prevents dust gathering at the receiving section 126.

The feed roller mechanism 404 is provided with a driving roller 438 and a follower roller 440 which cooperates with the driving roller 438 and feeds the sheet material downstream. The driving roller 438 is disposed at the upper end of the other end portion of the machine housing 6, and projects slightly upwardly through an opening formed in the upper wall 149 of the opening-closing housing 12. The driving roller 438 is drivingly connected to a driving source of the laser beam printer via a clutch mechanism or the like, and is rotated in the direction shown by an arrow. The follower roller 440 is rotatably mounted on the base portion of the upper cover member 408. As the follower roller 440 is so mounted, the base portion of the upper cover member 408 slightly projects upwardly in a triangular shape, and the follower roller 440 is disposed in the space formed by this projection of the base portion. With this structure, when the upper cover member 408 is at the closed position, the follower roller 440 is positioned on the upper side of the driving roller 438 and coacts with it. The feed roller mechanism 404 is thus maintained in the feed state. On the other hand, when the upper cover member 408 is held at the open position, the follower roller 440 moves upwardly from the driving roller 438, and is spaced from the driving roller 438. As a result, the feed roller mechanism 404 is in the non-feed state. When the upper cover member 408 is at the open position, the clutch means (not shown) for rotating the driving roller 438 is not energized.

Accordingly, the upstream portion of the re-introducing conveying passage extending nearly horizontally above the machine housing 6 from its one end portion (the left end portion in Figure 1) to the other end (the right end in Figure 1) is defined at its one side (the lower side) by the auxiliary receiving member 406, especially the supporting guide protrusions 422, the upper wall 149 and the driving roller 438 and at its other side (upper side) by the upper cover member 408 and the follower roller 440.

The illustrated re-introducing conveying passage is further provided with a guide wall 444 disposed outwardly of a wall 442 existing in the other end (the right end in Figures 1 and 4) of the housing 12. Guide protrusions 446 (only one of which is shown in Figures 1 and 4) are provided at both side ends of the guide wall 444, and fixed to the outside surface of the wall 442. The guide wall 444 extends downwardly from the upper end of the wall 442, as shown in Figure 1.

In the illustrated embodiment, the table 74 in the hand-insertion feed means 70 defines part of the re-introducing conveying passage. A pair of guide protrusions 448 (one of which is shown in Figures 1 and 4) spaced from each other in the direction perpendicular to the sheet surface are provided on the upper surface of the table 74, and an abutting piece 450 projecting downwardly is provided integrally at one end portion of the table 74. Accordingly, when the table 74 is at the feed position, the abutting piece 450 abuts with the outside surface of the wall 80 of the lower housing 8 to hamper pivoting movement of the table 74 beyond the feed position. At the feed position, one of the guide protrusions 448 acts as a guide means for conducting the sheet material, and the sheet material positioned on the table 74 is introduced into the machine housing 6 through the opening 76 along the guide protrusion 448. On the other hand, when the table 74 is pivoted upwardly and held at the storage position, the pair of guide protrusions 448 abuts with the outside surface of the wall 442 of the housing 12 to hamper the pivoting movement of the table 74 beyond the storage position. It is preferred to provide a permanent magnet in one of the table 74 (guide protrusions 448) and the wall 448, for example, and an iron piece attractable to the permanent magnet in the other, and allowing the iron piece to be magnetically attracted to, and held by, the permanent magnet when the table 74 is held by the storage position, although this modification is not shown in the drawings.

With this structure, the downstream portion of the re-introducing conveying passage extending nearly perpendicularly in the vertical direction on the right-hand side of the machine housing 6 in Figure 1 is defined at its one side (left side in Figure 1) by the wall 442 and at its other side (right side in Figure 1) by the guide wall 444 and the table 74, and both side edges of a sheet material conveyed through this downstream portion are guided by the pair of guide protrusions 446 provided in the guide wall 444 and the pair of guide protrusions 448 provided in the table 74.

An introduction tongue-like piece 452 for introducing the sheet material conveyed through the re-introducing conveying passage into the housing 6 through the opening 76 is further provided in the upper end of the wall 80 of the lower housing 8, and projects slightly to the right in Figures 1 and 4 from the outside surface of the wall 80. In relation to the introduction tongue-like piece 452, a receiving depression 454 is provided in the end of the table 74 (Figure 1). Accordingly, as can be seen from Figure 1, when the table 74 is at the feed position, the introduction tongue-like piece 452 is positioned in the receiving depression 454 to conduct the sheet material moving over the table 74 to the opening 76. On the other hand, when the table 74 is held at the storage position, the introduction tongue-like piece 452 defines part of the re-introducing conveying passage to conduct the sheet material conveyed through the re-introducing conveying passage to the opening 76.

The sorter 400 is disposed to the right of the laser beam printer in Figures 1 and 4. The sheet material conveyed through the re-introducing conveying passage is selectively conducted to the sorter 400 or the opening 76 defined in the vertically intermediate part (between the walls 442 and 80) of the other surface of the machine housing 6. With reference to Figures 1 and 2, the illustrated sorter 400 is provided with a supporting frame 464 consisting of a bottom wall 460 and a pair of side walls 462 (one of which is shown in Figure 1) extending upwardly from the bottom wall 460. The supporting frame 464 is supported at the position shown in Figure 1 by a supporting mechanism (not shown). A plurality of bin trays 466 spaced from each other vertically are disposed between the pair of side walls 462. One end portion (the left end portion in Figure 1) of each of the bin trays 466 is supported vertically movably by a supporting post 468, and its other end portion, by a supporting projection 472 of a supporting member 470. At one end portion of such bin trays 466 is further disposed an elevating mechanism (not shown) which moves one end portion of the bin trays 466 successively upwardly or downwardly. An introduction opening 474 is defined in the left surface in Figure 1 of the supporting frame 464. The introduction opening 474 is positioned nearly opposite to the feed roller mechanism 404. The sheet material introduced through this introduction opening 474 in the manner described below passes through an introduction passage defined by a guide plate pair 476, an introduction roller pair 478 and a guide plate pair 480 and is received by any one of the bin trays 466.

A passage switching means 482 for switching the feeding direction of the sheet member is provided in the right top corner portion in Figure 1 of the machine housing 6. With reference mainly to Figures 2, 3-A and 3-B, the passage switching means 482 is provided with an arcuate switching guide plate 484. Supporting plates 486 are provided at both end portions of the switching guide plate 484, and one end portion of the supporting plate 486 is pivotally mounted via a short rod 488 provided in the housing 6. In this regard, an elongate opening 490 is formed in the upper end portion of the wall 442 of the opening-closing housing 12, and the supporting plate 486 is linked through the opening 490. The switching guide plate 484 is held selectively at a first position shown in Figure 3-A (the position shown in Figure 2 and by the solid line in Figure 1) and a second position shown in Figure 3-B (the position shown in Figure 4 and by the two-dot chain line in Figure 1), and this switching from one position to the other can be performed by, for example, controlling the operation of a magnetic solenoid. At the first position, the switching guide plate 484 projects upwardly of the wall 149 to shut off the introduction opening 474 of the sorter 400, and curves the sheet material conveyed by the action of the feed roller mechanism 404 downwardly and conducts it between the wall 442 and the guide wall 444. At the second position, the switching guide plate 484 recedes downwardly of the wall 149 and permits feeding of the sheet material conveyed by the action of the feed roller mechanism 404 to the sorter 400. To permit this receding, an opening 492 for receiving a guide protrusion 484a provided in the switching guide plate 484 is formed in the wall 442.

When an image is formed overlappingly on one surface of a sheet material in the laser beam printer described above, the auxiliary receiving member 406 is held at the second position; the upper cover member 408, at the closed position; the table 74, at the storage position; and the switching guide plate 484, at the first position (for example, by energizing the electromagnetic solenoid, the switching guide plate 484 is held at the first position) (see Figure 1). Accordingly, the sheet material delivered fom the delivery opening 402 by the action of the discharge roller pair 102 passes through the re-introducing conveying passage (one side of which is defined by the auxiliary receiving member 406, the upper wall 149 and the wall 442 and the other side of which is defined by the upper cover member 408, the switching guide plate 484, the guide wall 444, the table 74 and the introduction tongue-piece 452), undergoes the action of the feed roller mechanism 404, and is introduced into the machine housing 6 through the opening 76 acting as an introduction opening. It is seen from Figure 1 that the sheet material delivered from the delivery opening 402 is discharged with its image-bearing surface directed downwardly, and introduced into the opening 76 through the re-introducing conveying passage with the image-bearing surface directed upwardly. The introduced sheet material is again conveyed through the conveying passage. When the sheet is again conveyed, the toner image formed on the surface of the photosensitive material on the rotating drum 18 is transferred to the image-bearing surface in the transfer zone 32. As a result, the toner image is formed overlappingly on the image-bearing surface of the sheet material. The sheet material having one surface bearing overlapping images is delivered out of the machine housing 6 through the delivery opening 402. The switching guide plate 484 is switched over to the second position (for example, by deenergizing the electromagnetic solenoid) after the sheet material is introduced into the machine housing 6 through the re-introducing conveying passage. Hence, the sheet material so delivered is fed to the sorter 400 between the auxiliary receiving member 406 and the upper cover member 408, and sorted.

On the other hand, when the sheet material is to be fed to the sorter 400 directly without forming an overlapping image on one image-bearing surface, the auxiliary receiving member 406 is held at the second position; the upper cover member 408, at the closed position; and the switching guide plate 484 at the second position. At this time, the sheet material delivered from the delivery opening 402 is not conducted downwardly by the switching guide plate 484, but is conducted directly to the sorter 400 between the auxiliary receiving member 406 and the upper cover member 408.

When the sheet material is to be received in the receiving section 126, the auxiliary receiving member 406 is held at the first position, and the cover member 408, at the open position, as shown in Figure 4. At this time, the sheet material delivered from the delivery opening 402 is not conducted by the feed roller mechanism 404, but is discharged in the receiving section 126 and then moves downwardly along the inclined upper wall 128, and is received in the receiving section 126.

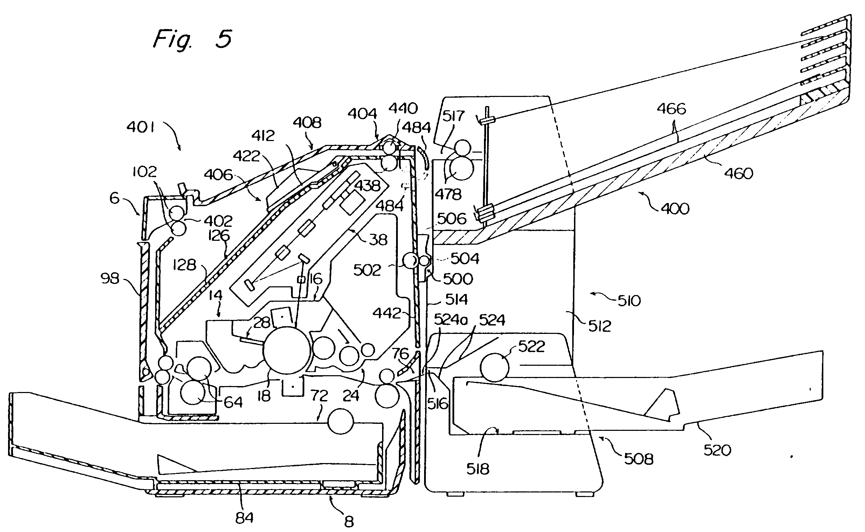

Figure 5 shows a modified example of the laser beam printer in the embodiment shown in Figs. 1 to 4. In this modified example, an improvement is made in the re-introducing conveying means.

In the modified example shown in Figure 5, an auxiliary roller mechanism 500 is disposed in the right end portion in Figure 5 of the machine housing 6. The auxiliary roller mechanism 500 is comprised of a driving roller 502 and a follower roller 504 cooperating with the driving roller 502. The driving roller 502 is mounted rotatably in the machine housing 6, drivingly connected to a driving source (not shown) of the laser beam printer via a clutch means or the like, and is rotated in the direction shown by an arrow. The driving roller 502 projects slightly to the right in Figure 5 through an opening formed in the wall 442 of the opening-closing housing 12. The follower roller 504 is supported rotatably on a pair of supporting projections 506 (one of which is shown) provided on the outside surface of the wall 442. The auxiliary roller mechanism 500 is disposed in a vertically intermediate part of the wall 442, and nips the sheet material conveyed downwardly toward the opening 76 and feeds it further downstream.

In the modified example, an auxiliary unit 510 provided with the sorter 400 and a feed means 508 is disposed on the right-hand side in Figure 5, and part of the auxiliary unit 510 defines part of the reintroducing conveying passage. The illustrated auxiliary unit 510 has a pair of spaced supporting base plates 512 (one of which is shown). The feed means 508 is disposed in the lower part of the base plates 512 and the sorter 400 is disposed in the upper part of the base plates 512. A wall 514 defining the left surface of the auxiliary unit 510 is provided in the left end of the pair of supporting base plates 512 in Figure 5. A delivery opening 516 is defined in the lower part of the wall 514, and an introduction opening 517, in its upper part. The wall 514 extends perpendicularly in the vertical direction opposite to, and nearly parallel to, the wall 442 of the machine housing 6. The wall 514 defines part of the re-introducing conveying passage. The feed means 508 is provided with a cassette 520 to be detachably loaded in a receiving section 518 and a feed roller 522 disposed above the receiving section 518, and a sheet material delivered from the cassette 520 by the action of the feed roller 522 passes between the guide plates 524 and through the delivery opening 516 and the opening 76 of the machine housing 6, is fed into the conveying passage.

In the modified example, in place of the introduction tongue-like piece in the above described embodiment, the end of the lower guide plate 524a of the guide plate pair 524 is projected into the housing 6 through the opening 76. Accordingly, the sheet material fed from the feed means 508 is guided by the guide plate 524a, and introduced exactly into the machine housing 6 through the opening 76. The sheet material conveyed through the re-introducing conveying passage is conducted exactly to the opening 76 by the action of this end portion of the guide plate 524a, and fed to the conveying passage through the opening 76.

Otherwise, the structure of the modified example is substantially the same as that of the embodiment shown in Figs. 1 to 4.

In this modified example, too, the re-introducing conveying passage for conducting the sheet material delivered from the delivery opening 516 to the opening 76 is provided outside the machine housing 6. Its one side is defined by the auxiliary receiving member 406, the upper wall 149 and the wall 442, and its other side, by the upper cover member 408, the switching guide plate 484, the wall of the auxiliary unit 510 and part of the guide plate 524a. The sheet material conveyed through the re-introducing conveying passage is fed to the opening 76 by the action of the feed roller mechanism 404 and the auxiliary roller mechanism 500.

## Claims

1. An image-forming machine comprising a conveying passage (69) for conveying sheet materials and a receiving section (126) for receiving sheet materials having an image formed during conveyance through the conveying passage (69);
wherein
a delivery opening (402) for delivering sheet materials conveyed through the conveying passage (69) to said receiving section (126) and an introduction opening (76) for introducing the sheet materials into a housing (6) of the machine and feeding them to the conveying passage (60) are defined in the housing (6) of the machine,
and characterized by
a re-introducing conveying means (482, 442, 444, 446, 484) for selectively conveying the sheet materials delivered through the delivery opening (402) into the introduction opening (76) is disposed between the delivery opening (402) and the introduction opening (76), and conducts the sheet material delivered from the delivery opening (402) to the introduction opening (76) outside the housing of the machine.

2. The image-forming machine of claim 1 in which the delivery opening (402) is defined in the upper end of one end portion of the housing (6); the introduction opening (76) is defined in a vertically intermediate part of the other end of the housing (6); and a re-introducing conveying passage defined by the re-introducing conveying means extends above the housing (6) from its one end portion to the other and further extends downwardly outwardly of the other surface of the housing (6).

3. The image-forming machine of claim 2 in which the other surface of the housing (6) defines one side of part of the re-introducing conveying passage.

4. The image-forming machine of claim 3 in which a table (74) for hand-insertion is provided near the introduction opening (76) of the housing (6); and the table (74) is free to pivot between the feed position at which it extends nearly horizontally outwardly from the introduction opening (76) and a storage position at which it extends nearly perpendicularly along the other surface of the housing (6), and at the storage position, the table (74) defines the other side of said part of the re-introducing conveying passage.

5. The image-forming machine of claim 3 in which an auxiliary unit (510) provided with a feed means (500) for feeding a sheet material into the introduction opening (76) and a sorter means for selectively receiving and sorting sheet materials delivered from the delivery opening (402) is provided outwardly of the other surface of the housing (6), and part of the auxiliary unit (510) defines the other side of the part of the re-introducing conveying passage.

6. The image-forming machine of claim 2 in which a passage switching means (482) adapted to be selectively held at a first position and a second position is disposed in the upper end part of the other end of the housing (6), and when the passage switching means (484) is at the first position, it conducts a sheet material delivered from the delivery opening (402) toward the introduction opening (76), and when it is at the second position, it permits the sheet material delivered from the delivery opening (402) to be fed to the sorter (400).

7. The image-forming machine of claim 1 in which a feed roller mechanism for feeding the sheet material delivered through the delivery opening (402) further downstream is provided at the upper end of the other end portion of the housing.

8. The image-forming machine of claim 1 in which an auxiliary roller (502, 504) for feeding the sheet material fed toward the introduction opening (76) further downstream is provided at a vertically intermediate part of the other end portion of the housing (6).

9. The image-forming machine of claim 2 in which an auxiliary receiving member (406) is mounted on the receiving section (126) so as to be free to pivot between a first position and a second position; and when the auxiliary receiving member (406) is at the first position, it shuts off the re-introducing conveying passage and acts as an auxiliary receiving portion for receiving the sheet material delivered from the delivery opening (402), and when it is at the second position, it defines one side of the part of the re-introducing conveying passage and guides the sheet material delivered from the delivery opening (402) toward the introduction opening (76).

10. The image-forming machine of claim 9 in which an upper cover member (408) is mounted on the housing (6) so as to be free to pivot between an opening position at which it keeps the overhead space of the housing open and a closed position at which it covers the overhead space; and when the upper cover member (408) is at the open position, it permits positioning of the auxiliary receiving member (406) at the first position, and at the closed position, it defines the other side of the part of the re-introducing conveying passage and guides the sheet material delivered from the delivery opening (402) toward the introduction opening (76).

## Patentansprüche

1. Bilderzeugungsvorrichtung umfassend eine Förderdurchlaß (69) zum Fördern von Blattmaterialien und einen Aufnahmeabschnitt (126) zum Aufnehmen von Blattmaterialien mit einem während des Förderns durch den Förderdurchlaß (69) erzeugten Bild,
worin eine Zuführöffnung (402) zum Zuführen von durch den Förderdurchlaß (69) geförderten Blattmaterialien zu dem Aufnahmeabschnitt (126) und eine Einführöffnung (76) zum Einführen der Blattmaterialien in ein Gehäuse (6) des Geräts und für deren Zuführen zu dem Förderdurchlaß (60) in dem Gehäuse (6) des Geräts ausgebildet sind,
dadurch gekennzeichnet, daß
eine Wiedereinführfördereinrichtung (482, 442, 444, 446, 484) zum selektiven Fördern der durch die Zuführöffnung (402) in die Einführöffnung (76) zugeführten Blattmaterialien zwischen der Zuführöffnung (402) und der Einführöffnung (76) angeordnet ist und das von der Zuführöffnung (402) zugeführte Blattmaterial zu der Einführöffnung (76) außerhalb des Gehäuses des Geräts führt.

2. Bilderzeugungsvorrichtung nach Anspruch 1, bei der die Zuführöffnung (402) in dem oberen Ende des einen Endbereichs des Gehäuses (6) ausgebildet ist, die Einführöffnung (76) in einem senkrechten Zwischenteil des anderen Endes des Gehäuses (6) ausgebildet ist und sich ein Wiedereinführförderdurchlaß, der durch die Wiedereinführfördereinrichtung gebildet ist, oberhalb des Gehäuses (6) von seinem einen Endbereich zu dem anderen erstreckt und sich weiterhin nach unten und außerhalb der anderen Fläche des Gehäuses (6) erstreckt.

3. Bilderzeugungsvorrichtung nach Anspruch 2, bei der die andere Fläche des Gehäuses (6) eine Seite eines Teils des Wiedereinführförderdurchlasses bildet.

4. Bilderzeugungsvorrichtung nach Anspruch 3, bei der ein Tisch (74) für die Einführung per Hand in der Nähe der Einführöffnung (76) des Gehäuses (6) vorgesehen ist, und der Tisch (74) frei ist, sich zwischen der Zuführstellung, bei der er sich fast waagerecht nach außen von der Einführöffnung (76) aus erstreckt, und einer Aufbewahrungsstellung zu verschwenken, bei dem er sich fast lotrecht entlang der anderen Fläche des Gehäuse (6) erstreckt, und in der Aufbewahrungstellung bildet der Tisch (74) die andere Seite des Teils des Wiedereinführförderdurchlasses.

5. Bilderzeugungsvorrichtung nach Anspruch 3, bei der eine Hilfseinheit (510) mit einer Zuführeinrichtung (500) zum Zuführen eines Blattmaterials in die Einführöffnung (76) ausgestattet ist und eine Sortiereinrichtung zum selektiven Aufnehmen, und Sortieren von Blattmaterialien, die von der Zuführöffnung (402) zugeführt werden, außerhalb der anderen Fläche des Gehäuses (6) vorgesehen ist, und ein Teil der Hilfseinheit (510) die andere Seite des Teils des Wiedereinführförderdurchlasses bildet.

6. Bilderzeugungsvorrichtung nach Anspruch 2, bei der eine Durchlaßschaltereinrichtung (482), die selektiv in einer ersten Stellung und einer zweiten Stellung gehalten werden kann, in dem oberen Endteil des anderen Endes des Gehäuses (6) angeordnet ist, und wenn sich die Durchlaßschaltereinrichtung (484) in der ersten Stellung befindet, führt sie ein von der Zuführöffnung (402) zugeführtes Blattmaterial in Richtung auf die Einführöffnung (76), und wenn sie sich in der zweiten Stellung befindet, gestattet sie es, daß das von der Zuführöffnung (402) zugeführte Blattmaterial der Sortiereinrichtung (400) zugeführt wird.

7. Bilderzeugungsvorrichtung nach Anspruch 1, bei der ein Zuführwalzenmechanismus zum Zuführen des durch die sich weiter stromabwärts befindende Zuführöffnung (402) zugeführten Blattmaterials an dem oberen Ende des anderen Endbereichs des Gehäuses vorgesehen ist.

8. Bilderzeugungsvorrichtung nach Anspruch 1, bei der eine Hilfswalze (502, 504) zum Zuführen des in Richtung auf die sich weiter stromabwärts befindende Einführöffnung (76) zugeführten Blattmaterials an einem senkrechten Zwischenteil des anderen Endbereichs des Gehäuses 6 vorgesehen ist.

9. Bilderzeugungsvorrichtung nach Anspruch 2, bei der ein Hilfsaufnahmeelement (406) an dem Aufnahmeabschnitt (126) derart angebracht ist, daß es sich zwischen einer ersten Stellung und einer zweiten Stellung verschwenken kann, und wenn sich das Hilfsaufnahmeelement (406) in der ersten Stellung befindet, versperrt es den Wiedereinführförderdurchlaß und wirkt als Hilfsaufnahmebereich für die Aufnahme des von der Zuführöffnung (402) zugeführten Blattmaterials, und wenn es sich in der zweiten Stellung befindet, bildet es eine Seite des Teils des Wiedereinführförderdurchlasses und führt das von der Zuführöffnung (402) zugeführte Blattmaterial in Richtung auf die Einführöffnung (76).

10. Bilderzeugungsvorrichtung nach Anspruch 9, bei der ein oberes Abdeckelement (408) an dem Gehäuse (6) derart angebracht ist, daß es sich zwischen einer Öffnungsstellung, bei der es den oberen Raum des Gehäuses offen hält, und einer Schließstellung verschwenken kann, bei der es den oberen Raum abdeckt, und wenn sich das obere Abdeckelement (408) in der Öffnungsstellung befindet, gestattet es die Positionierung des Hilfsempfangselements (406) in der ersten Stellung, und in der Schließstellung bildet es die andere Seite des Teils des Wiedereinführförderdurchlasses und führt das von der Zuführöffnung (402) zugeführte Blattmaterial in Richtung auf die Einführöffnung (76).

## Revendications

1. Une machine de formation d'images comprenant un passage de transport (69) pour transporter des matériaux en feuilles et une section réceptrice (126) pour recevoir des matériaux en feuilles ayant une image formée pendant le transport à travers le passage de transport (69) ;
dans laquelle
une ouverture de livraison (402) pour livrer des matériaux en feuilles transportés à travers le passage de transport (69) jusqu'à ladite section réceptrice (126) et une ouverture d'introduction (76) pour introduire les matériaux en feuilles dans un carter (6) de la machine et les amener au passage de transport (60) sont définies dans le carter (6) de la machine,
et caractérisé en ce
qu'un moyen de transport de réintroduction (482, 442, 444, 446, 484) pour transporter sélectivement les matériaux en feuilles livrés à travers l'ouverture de livraison (402) dans l'ouverture d'introduction (76) est disposé entre l'ouverture de livraison (402) et l'ouverture d'introduction (76) et conduit le matériau en feuille livré depuis l'ouverture de livraison (402) à l'ouverture d'introduction (76) à l'extérieur du carter de la machine.

2. La machine de formation d'images de la revendication 1, dans laquelle l'ouverture de livraison (402) est définie dans l'extrémité supérieure d'une portion d'extrémité du carter (6) ; l'ouverture d'introduction (76) est définie dans une partie verticalement intermédiaire de l'autre extrémité du carter (6) ; et un passage de transport de réintroduction défini par le moyen de transport de réintroduction s'étend au-dessus du carter (6) depuis sa première portion d'extrémité jusqu'à l'autre et, en outre, s'étend vers le bas vers l'extérieur de l'autre surface du carter (6).

3. La machine de formation d'images de la revendication 2, dans laquelle l'autre surface du carter (6) définit un côté d'un partie du passage de transport de réintroduction.

4. La machine de formation d'images de la revendication 3, dans laquelle une table (74) pour une insertion manuelle est disposée près de l'ouverture d'introduction (76) du carter (6) ; et la table (74) est libre de pivoter entre la position d'amenée dans laquelle elle s'étend presque horizontalement vers l'extérieur depuis l'ouverture d'introduction (76) et une position de stockage dans laquelle elle s'étend presque perpendiculairement le long de l'autre surface du carter (6) et, à la position de stockage, la table (74) définit l'autre côté de ladite partie du passage de transport de réintroduction.

5. La machine de formation d'images de la revendication 3, dans laquelle une unité auxiliaire (510) munie d'un moyen d'amenée (500) pour amener un matériau en feuille dans l'ouverture d'introduction (76) et un moyen de triage pour recevoir et trier sélectivement des matériaux en feuilles livrés depuis l'ouverture de livraison (402) sont disposés vers l'extérieur de l'autre surface du carter (6), et une partie de l'unité auxiliaire (510) définit l'autre côté de la partie du passage de transport de réintroduction.

6. La machine de formation d'images de la revendication 2, dans laquelle un moyen de commutation de passage (482), adapté pour être maintenu sélectivement à une première position et à une seconde position, est disposé dans la partie d'extrémité supérieure de l'autre extrémité du carter (6) et, lorsque le moyen de commutation de passage (484) est dans la première position, il conduit un matériau en feuille livré depuis l'ouverture de livraison (402) vers l'ouverture d'introduction (76) et, lorsqu'il est dans la seconde position, il permet au matériau en feuille livré depuis l'ouverture de livraison (402) d'être ramené à la trieuse (400).

7. La machine de formation d'images de la revendication 1, dans laquelle un moyen d'amenée à rouleaux, pour amener plus loin vers le bas le matériau en feuille livré à travers l'ouverture de livraison (402), est disposé à l'extrémité supérieure de l'autre portion d'extrémité du carter.

8. La machine de formation d'images de la revendication 1, dans laquelle un rouleau auxiliaire (502, 504), pour amener plus loin vers le bas le matériau en feuille amené vers l'ouverture d'introduction (76) est disposé à une partie verticalement intermédiaire de l'autre portion d'extrémité du carter (6).

9. La machine de formation d'images de la revendication 2, dans laquelle un organe récepteur intermédiaire (406) est monté sur la section réceptrice (126) de manière à être libre de pivoter entre une première position et une seconde position ; et, lorsque l'organe récepteur auxiliaire (406) est dans la première position, il ferme le passage de transport de réintroduction et agit comme une portion réceptrice auxiliaire pour recevoir le matériau en feuille livré depuis l'ouverture de livraison (402) et, lorsqu'il est dans la seconde position, il définit un côté de la partie du passage de transport de réintroduction et guide le matériau en feuille livré depuis l'ouverture de livraison (402) vers l'ouverture d'introduction (76).

10. La machine de formation d'images de la revendication 9, dans laquelle un organe à couvercle supérieur (408) est monté sur le carter (6) de manière à être libre de pivoter entre une position d'ouverture dans laquelle il maintient ouvert l'espace supérieur du carter ; et, lorsque l'organe à couvercle supérieur (408) est dans la position ouverte, il permet le positionnement de l'organe récepteur auxiliaire (406) à la première position et, dans la position fermée, il définit l'autre côté de la partie du passage de transport de réintroduction et guide le matériau en feuille livré depuis l'ouverture de livraison (402) vers l'ouverture d'introduction (76).
